# FASCICULE DE BREVET EUROPEEN

(11) **EP 4 076 087 B1**
(45) Date de publication et mention de la délivrance du brevet: **17.04.2024**
(21) Numéro de dépôt: 20820567.4
(22) Date de dépôt: 08.12.2020
(51) Int. Cl.: A44B 1/28, A44C 7/00, A44C 15/00, A01K 11/00

(54) **ORGANE DE MAINTIEN EN POSITION D'UN OBJET DE PART ET D'AUTRE D'UN ELEMENT POURVU D'UN PERÇAGE**
ELEMENT ZUM HALTEN EINES GEGENSTANDES IN EINER POSITION AUF JEDER SEITE EINES MIT EINER BOHRUNG VERSEHENEN ELEMENTS
MEMBER FOR HOLDING AN OBJECT IN POSITION ON EITHER SIDE OF AN ELEMENT PROVIDED WITH A BORE

(30) Priorité: 20.12.2019 FR 1915362
(43) Date de publication de la demande: 26.10.2022
(73) Titulaire: Podda, Florent, 06150 Cannes la Bocca (FR)
(72) Inventeur: PODDA, Sébastien, 06150 Cannes la Bocca (FR); PODDA, Florent, 06150 Cannes la Bocca (FR)
(74) Mandataire: Dennemeyer & Associates S.A.
(86) Numéro de dépôt international: PCT/IB2020/061622
(87) Numéro de publication internationale: WO 2021/124009

(56) Documents cités:
- WO-A1-92/21262
- FR-A1- 2 577 380

## Description

La présente invention concerne un organe de maintien en position d'un objet sur un élément pourvu d'un perçage.

Ici, le terme « élément » peut être une partie du corps d'un être vivant pourvue d'un perçage. Ici, l'expression « être vivant » concerne autant un être humain qu'un mammifère ou un oiseau, qu'il s'agisse d'un animal domestique ou sauvage. La partie du corps d'un être vivant concernée par l'invention peut être une oreille, une joue, une narine ou une aile dans le cas d'un oiseau. L'objet peut être un accessoire décoratif, un moyen d'identification et/ou de localisation de l'être vivant. A titre d'exemples non limitatifs, on peut citer des boucles d'oreilles, des piercings, des bijoux, des boucles d'identification animale, des balises GPS ou autres.

L'élément pourvu d'un perçage, selon l'invention, peut être une pièce de tissu ou une partie d'un vêtement. Ainsi, l'objet est, par exemple, une épinglette ou pin's, une broche, un bouton de manchette. Dans le cadre de l'invention, l'objet est maintenu de part et d'autre de l'élément, partie du corps ou tissu ou vêtement, par passage d'une portion de l'objet à travers l'élément, ce dernier étant avantageusement perforé au préalable.

l'invention trouve son application quelle que soit la matière constitutive de l'organe de maintien, de l'objet ou de l'élément Ainsi, il peut s'agir de métaux, précieux ou non, d'alliages métalliques, de bois, de pierre, de céramique, de matériaux composites ou de polymères ou d'une combinaison de plusieurs de ces matières.

Une des solutions de maintien d'un tel objet consiste à ce que l'objet soit en deux parties : une partie dite mâle traverse un orifice ménagé dans la partie de l'élément percé concernée à partir d'une face de cette partie de l'élément et s'insère dans un logement ménagé dans une autre partie dite femelle, positionnée sur l'autre face de la partie de l'élément, en regard dudit orifice. De manière courante, la partie mâle est configurée en tige et elle est maintenue en position dans la partie femelle par coincement. Un tel maintien est, avantageusement, réversible afin de pouvoir si besoin séparer les deux parties de l'objet et donc déséquiper l'élément concerné.

Un tel mode de maintien est efficace et adapté autant au maintien d'un accessoire décoratif tel qu'un bijou, un bouton de manchette ou une boucle d'oreille que d'un organe d'identification d'un animal de type boucle d'oreille ou bague aviaire. Il s'avère néanmoins que l'insertion de la partie mâle dans le logement n'est pas aisée car, si la mise en place est effectuée par la personne recevant ledit objet et dans ce cas, elle ne peut avoir une vision simultanée des deux parties, ce qui implique un positionnement des parties mâle et femelle en aveugle, par tâtonnement. Lorsqu'il s'agit de positionner l'objet sur un animal, ce dernier n'est généralement pas anesthésié, il faut donc effectuer l'opération de mise en place rapidement, l'insertion de la partie mâle dans le logement devant être réalisée du premier coup.

Une solution connue de WO-A-2006 086 311 consiste à utiliser des parties aimantées en lieu et place des parties mâle et femelle. Une telle solution est effectivement plus rapide pour assurer le positionnement mais, outre l'effet de pincement sur l'élément percé, ce qui dans le cas d'une partie anatomique peut être douloureux, une liaison magnétique avec un élément intercalé entre les aimants n'est pas suffisamment forte pour éviter un détachement accidentel des deux parties aimantées. WO-A-92/21262 divulgue un dispositif limitant toute réaction allergique au niveau du percement de l'oreille. Pour cela, la tige de fixation de la boucle d'oreille passe dans un tube en matériau non allergène introduit dans le trou du lobe de l'oreille et qui isole le métal de la tige de la boucle d'oreille de la peau. Le tube est maintenu en place par un écrou fileté en appui contre l'arrière du lobe d'oreille. Le tube comprend une extrémité ouverte en entonnoir pour l'insertion de la tige de la boucle d'oreille, cette dernière devant traverser l'écrou pour son maintien. Ce dispositif nécessite d'une part la mise en place du tube et son vissage sur l'écrou puis l'insertion de la tige dans le tube et la fixation de cette dernière sur l'écrou. Outre le nombre de pièces concernées, la mise en place est complexe et mal aisée.

Il existe donc un besoin pour un maintien et une mise en place sécurisé d'un objet de part et d'autre d'un perçage avec un minimum de pièces, aisé à effectuer, même sans vision directe sur l'élément et sur le perçage.C'est à ce besoin que se propose de remédier l'invention en proposant un organe de maintien en position d'un objet sur un élément pourvu d'un perçage, aisé et rapide à mettre en place, que ce soit par la personne recevant l'objet ou par un tiers et avec un maintien optimal et pérenne de l'objet sur l'élément, quelle que soit la nature de ce dernier.

A cet effet, l'invention a pour objet un organe de maintien en position d'un objet sur un élément pourvu d'un perçage selon la combinaison des caractéristiques de la revendication 1.

L'invention permet ainsi, avec un moyen de guidage, de positionner de façon précise et rapide la partie mâle dans le logement de réception. La personne assurant la mise en place de l'organe, quelle qu'elle soit, ne tâtonne pas pour trouver le logement et présenter en face de ce dernier la partie mâle.

Selon des aspects avantageux mais non obligatoires de l'invention, un tel organe peut comprendre une ou plusieurs des caractéristiques suivantes:
- le moyen de guidage est configuré en cône de révolution.
- Le moyen de guidage est configuré en cône de type pyramidal.
- La bague et les joints définissent le logement de réception.
- Le corps est pourvu d'au moins deux organes de préhension.
- La paroi interne du moyen de guidage est lisse ou revêtue d'un anti adhérent.
- La partie mâle de l'organe de maintien est configurée en tige solidaire d'un objet et la partie femelle de l'organe est montée sur une partie d'un élément relié de manière pivotante à une patte fixée sur ledit objet.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig. 1] illustre une vue en perspective, des deux parties d'un organe de maintien conforme à un mode de réalisation de l'invention, en position montée de part et d'autre d'un élément, schématiquement représenté par un ovale en pointillés,
[Fig. 2] est une vue en perspective à partir d'une face latérale, à plus grande échelle, de la partie femelle de l'organe de maintien de la figure 1 équipée, au niveau de l'ouverture du logement, d'un moyen de guidage,
[Fig. 3] est une vue en perspective à partir de la face avant et à une autre échelle de l'organe de la figure 2,
[Fig. 4] est une vue en perspective, à partir de la face avant et à une autre échelle, des différents éléments constitutifs de la partie femelle illustrée aux figures 2 et 3 et
[Fig. 5] est une vue en perspective, à une autre échelle, d'un autre mode de réalisation de l'invention.

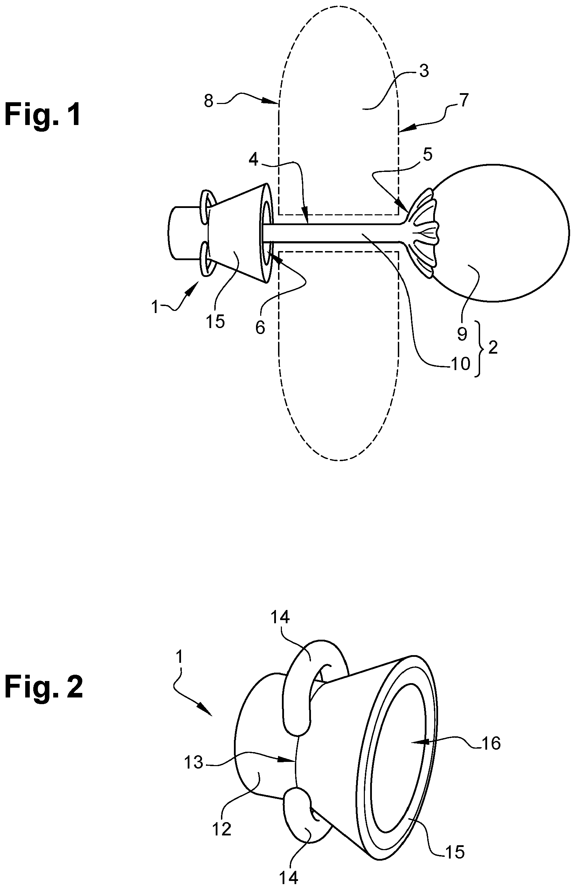

.La figure 1 est une représentation, selon un mode de réalisation de l'invention, d'un organe 1 de maintien en position d'un objet 2 de part et d'autre d'un élément 3 pourvu d'un perçage 4. Ici, l'élément 3 est schématiquement illustré sous forme d'un ovale en pointillés Cet ovale illustre une partie d'un vêtement, d'un tissu ou d'une partie du corps d'un être vivant, humain ou animal. Dans tous les cas, l'élément 3 est pourvu d'un perçage 4 traversant et dont les débouchés 5, 6 sur deux faces 7 respectivement 8 opposées de l'élément 3 sont ouverts. Ici, les débouchés 5, 6 sont identiques. En variante, ils sont différents. L'objet 2 qui est maintenu de part et d'autre de l'élément 3 est par exemple un bijou de type boucle d'oreille, lorsque l'élément 3 est un lobe d'une oreille. Afin de faciliter la lecture, le bijou 2 est représenté par une sphère 9 positionnée à une extrémité d'une tige 10. On conçoit que l'invention s'applique à d'autres types d'éléments 3 et/ou d'objets 2. A titre d'exemples non limitatifs, pour un être humain on peut citer un piercing dans une joue, une aile du nez ou toute autre partie du corps d'un être humain. Pour un animal l'objet peut être une boucle d'identification ou une bague aviaire. Lorsque l'élément 3 n'est pas une partie d'un être vivant, il peut s'agir d'un vêtement ou d'un tissu, l'objet à maintenir étant alors, par exemple, un bouton de manchette, une broche ou une épinglette également dénommée pin's.

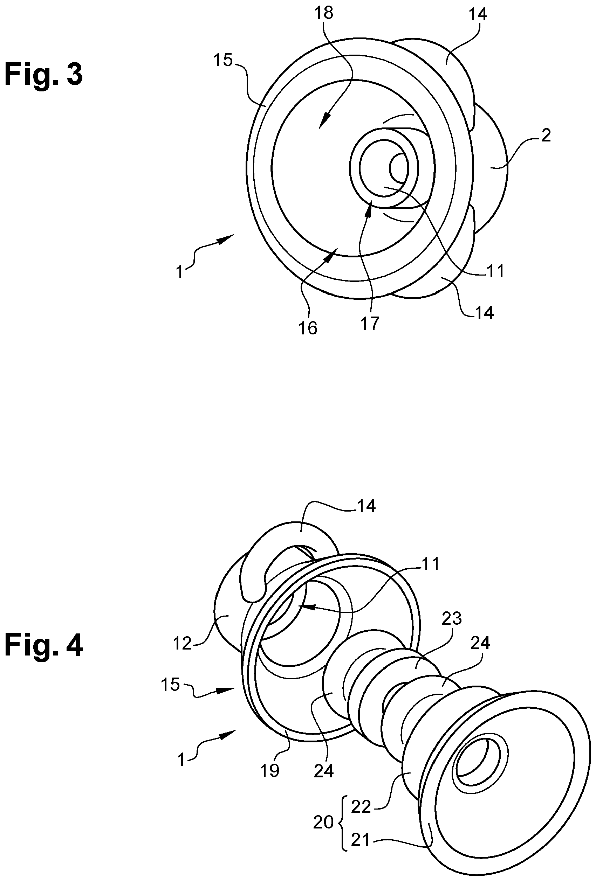

Comme cela ressort particulièrement de la figure 1, la tige 10 forme une partie dite mâle de l'objet 2. La longueur de la tige 10 est dans tous les cas supérieure à la longueur du perçage 4, cela que la tige 10 soit rectiligne ou non, à section circulaire ou non, crantée, lisse ou pourvue d'un pas de vis. L'extrémité libre, non illustrée, de la tige 10 est pointue et configurée pour s'insérer dans une partie dite femelle et formant un logement de réception 11 ménagé dans l'organe de maintien 1. Ce logement de réception 11 est visible aux figures 3 et 4.

La figure 2 illustre l'organe de maintien 1, selon un mode de réalisation de l'invention. Il comprend un corps principal 12, configuré en cylindre ouvert aux extrémités et à base circulaire. Le corps principal 12 définit une partie dite femelle de l'organe de maintien 1. Il abrite le logement de réception 11 de la tige 10. Une extrémité 13 ouverte du corps principal 12 est pourvue d'organes de préhension 14 de l'organe de maintien 1. Ici, les organes de préhension 14 sont deux anses coplanaires à la section transversale du corps 12. En variante, il s'agit de pattes, de reliefs discontinus tels des picots ou continus en forme de collerette ou d'autres formes géométriques. De plus leur nombre et/ou leur répartition peuvent être différents pour autant que ces organes de préhension assurent une préhension aisée de l'organe de maintien 1.

L'extrémité 13 forme l'ouverture d'accès au logement de réception 11 du corps principal 12. L'extrémité 13 est pourvue d'un moyen de guidage 15 de la tige 10 dans le logement de réception 11 ménagé dans le corps principal 12 de l'organe de maintien 1. Le moyen de guidage est, dans ce mode de réalisation de l'invention, configuré en un cône de révolution, tronqué, et à base circulaire ouverte. En variante, le cône de révolution est à base elliptique. Dans un autre mode de réalisation, le cône est de type pyramidal, donc à base carrée, rectangulaire ou polygonal. Dans tous les cas, le moyen de guidage 15 présente une section variable, allant en diminuant, entre sa plus grande ouverture 16 et son extrémité ouverte 17 débouchant dans le corps principal 12, en prolongement de l'extrémité 13 de ce dernier. Ici, l'extrémité 17 est également circulaire. En variante elle a une autre forme, par exemple différente de celle de l'ouverture 16. En d'autres termes, le moyen de guidage est globalement configuré en entonnoir.

Comme cela ressort des figures 2 à 4, la paroi interne 18 du moyen de guidage est lisse, entre l'ouverture 16 et l'extrémité 17. En variante, la paroi 18 est revêtue d'un matériau anti adhèrent. La forme du moyen de guidage 17 et le fait que sa paroi interne 18 n'offre aucune aspérité permet un guidage optimal de la tige 10 lorsque cette dernière est introduite dans le moyen de guidage 15.

Comme cela ressort de la figure 4, le moyen de guidage 15 est, selon l'invention, formé par deux parties emboitées coaxialement l'une dans l'autre. La partie externe 19 est celle de plus grandes dimensions. Elle est conique et fixée sur le corps principal 12, dans le prolongement de l'extrémité 13 du corps principal 12.

L'autre partie 20 forme la partie interne du moyen de guidage 15. La partie 20 comprend une zone 21 conique à base circulaire, de dimensions et de formes complémentaires à celles de la partie 19. Cette zone 21 est fixée sur un cylindre 22 à base circulaire. Le cylindre 22 est de dimensions et de forme adaptées pour s'insérer, à jeu minimal, dans le corps 12.

Une bague cylindrique 23 à base circulaire, visible à la figure 4, est intercalée entre le cylindre 22 et le corps 12. Des joints toriques 24, disposés de part et d'autre de la bague 23 assurent le maintien en position de cette dernière dans le corps 12. Ainsi, la bague 23, le cylindre 22 ainsi que les joints 24 définissent le logement de réception 11 de la tige 10. De la sorte, par coincement, la tige 10 est maintenue en position, de manière amovible, les dimensions des lumières de la bague 23, des joints 24 étant légèrement inférieures au diamètre externe de la tige 10. En variante, on peut avoir au moins un des joints 24 pourvu d'un filetage, de sorte que le blocage en position de la tige 10 dans son logement de réception 11 s'effectue par un mouvement de rotation, par exemple un quart de tour.

Lorsqu'un utilisateur présente, à partir d'une face 7 ou 8 d'un élément 3, en regard du perçage 4, la tige 10, avec son autre main il présente, à partir de l'autre face 8 ou 7 de l'élément 3, le moyen de guidage 15. Pour cela, il tient ce dernier par les organes de préhension 14 et le positionne de sorte que l'ouverture 16 du moyen de guidage 15 soit en regard du perçage. Il n'est pas nécessaire que l'ouverture 16 soit centrée sur le perçage, il suffit que ce dernier soit en regard d'un point quelconque situé dans le plan de l'ouverture 16. Une fois le positionnement effectué, l'utilisateur déplace la tige 10 en direction de l'organe de maintien 1. Grâce à la forme conique de la partie 20 et au fait que la paroi 18 soit lisse, la pointe de la tige 10, lorsqu'elle touche la paroi 18, est automatiquement dirigée, sans aucun ralentissement ou effet de freinage, vers le fond du cône 20, donc vers la bague 23 et les joints 24. La tige 10 se trouve alors automatiquement introduite dans son logement de réception. Il est à noter que, lors de ce mouvement, il n'est pas nécessaire que l'utilisateur ou un tiers ait une vision des éléments en déplacement, l'introduction et le maintien de la tige 10, donc de la partie mâle, dans le logement de réception 11 s'effectuant rapidement et de manière automatique.

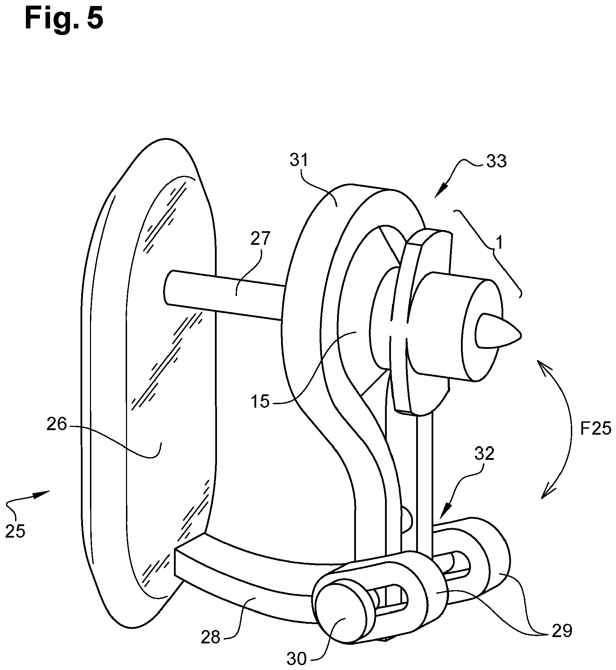

Le mode de réalisation de l'invention illustré à la figure 5 est particulièrement adapté à des boucles d'oreilles relativement lourdes et volumineuses qui sont maintenues non seulement sur une extrémité d'une tige mais également sur une patte ou raquette articulée venant en appui sur l'arrière de l'oreille. De la sorte, on évite tout effort et déformation du lobe de l'oreille. Ici, la référence 25 désigne l'ensemble formé par la raquette articulée munie de l'organe de maintien 1. La partie décorative 26 de l'ensemble 25 est fixée d'une part sur une extrémité d'une tige 27 et, d'autre part, à une extrémité d'une patte plate 28. L'autre extrémité de la patte 28 comprend deux reliefs 29 pourvus chacun d'un orifice traversant. Les reliefs 29 définissent ainsi une charnière adaptée pour recevoir une goupille 30.

Un élément 31 est configuré en forme d'oméga ou de raquette dont la partie centrale est vide. Un tel élément 31 est obtenu par pliage d'un fil métallique. Les extrémités libres 32 de l'élément 31 sont percées chacune d'un orifice traversant, similaire aux orifices des reliefs 29. Comme cela apparait à la figure 5, lorsque les extrémités 32 sont positionnées entre les reliefs 29 et que la goupille 30 est en place, l'élément 31 et la patte 28 sont articulés l'un par rapport à l'autre, un mouvement de rapprochement ou d'écartement relatif de ces éléments étant alors possible selon la double flèche F25.

La partie arrondie 33 de l'élément 31 est adaptée, en dimensions et en géométrie, pour recevoir l'organe de maintien 1, plus précisément le moyen de guidage 15. Ainsi, la face interne du fil constitutif de la partie 33 qui définit les limites de l'orifice central de la partie 33 est biseautée, de sorte à être de forme complémentaire à la paroi externe du moyen de guidage 15 qui est en entonnoir.

Ainsi, lorsque l'on met en place l'ensemble 25, on positionne d'abord l'organe de maintien 1 dans la partie 33 puis on place la partie décorative 26 et l'élément 31 de part et d'autre du lobe de l'oreille, par pivotement de la patte 28 et de l'élément 31 selon la double flèche F25 on présente la tige 27 dans l'organe de guidage 15 et, comme décrit précédemment, on solidarise la tige 27 dans l'organe de guidage 15. On assure le maintien en position d'une boucle d'oreille relativement volumineuse et lourde sans effort sur le lobe de l'oreille et avec une mise en place simple.

Dans un mode de réalisation, l'organe de maintien en position 1, ou au moins la tranche d'extrémité du moyen de guidage 15 qui est en contact avec l'élément 3 lorsque ce dernier est une partie du corps d'un être vivant, est en un matériau non allergique ou revêtu d'un matériau non allergique. Dans tous les cas, il convient qu'il n'y ait pas de réaction chimique ou biochimique, de type corrosion ou allergie, entre l'organe de maintien 1 et particulièrement le moyen de guidage 15 et l'élément 3.

## Revendications

1. Organe de maintien en position (1) d'un objet (2) sur un élément (3) pourvu d'un perçage (4), ledit objet (2) comportant une partie (10) dite mâle configurée en tige pointue dont l'extrémité libre est adaptée pour s'insérer dans un logement de réception (11) ménagé dans une partie (12) dite femelle de l'organe de maintien (1), le logement de réception (11) étant muni, au niveau de son ouverture (13), d'un moyen de guidage (15) de la partie mâle (10) dans le logement de réception (11) et le moyen de guidage (15) étant formé de deux parties (19, 20) de forme similaire et emboitées coaxialement l'une dans l'autre, **caractérisé en ce qu'**un cylindre (22) prolonge une partie conique (21), le cylindre (22) et la partie conique (21) constituant la partie interne (20) du moyen de guidage (15) et **en ce que** ledit organe (1) comporte également une bague (23) et des joints (24) insérés entre le cylindre (22) et un corps principal (12) de l'organe de maintien (1).

2. Organe selon la revendication 1, **caractérisé en ce que** le moyen de guidage (15) est configuré en cône de révolution.

3. Organe selon la revendication 1, **caractérisé en ce que** le moyen de guidage (15) est configuré en cône de type pyramidal.

4. Organe selon la revendication 1, **caractérisé en ce que** la bague (23) et les joints (24) définissent le logement de réception (11).

5. Organe selon la revendication 1, **caractérisé en ce que** le corps (12) est pourvu d'au moins deux organes de préhension (14).

6. Organe selon la revendication 1, **caractérisé en ce que** la paroi interne (18) du moyen de guidage est lisse ou revêtue d'un anti adhérent.

7. Organe selon la revendication 1, **caractérisé en ce que** la partie mâle de l'organe de maintien est configurée en tige (27) solidaire d'un objet et la partie femelle de l'organe est montée sur une partie (33) d'un élément (31) relié de manière pivotante à une patte (28) fixée sur ledit objet.

## Patentansprüche

1. Element zum Halten (1) eines Gegenstands (2) in Position auf einem Element (3), das mit einer Bohrung (4) versehen ist, wobei der Gegenstand (2) einen Teil (10) umfasst, der Steckteil genannt wird, der als spitzer Stift konfiguriert ist, dessen freies Ende dazu angepasst ist, sich in eine Aufnahme (11) einzufügen, die in einem Teil (12), der Buchsenteil genannt wird, des Halteelements (1) eingerichtet ist, wobei die Aufnahme (11) im Bereich ihrer Öffnung (13) mit einem Führungsmittel (15) des Steckteils (10) in der Aufnahme (11) versehen ist, und das Führungsmittel (15) aus zwei Teilen (19, 20) mit ähnlicher Form und die koaxial ineinander eingerastet sind, gebildet ist, **dadurch gekennzeichnet, dass** ein Zylinder (22) einen konischen Teil (21) verlängert, wobei der Zylinder (22) und der konische Teil (21) den Innenteil (20) des Führungsmittels (15) bilden, und dass das Organ (1) auch einen Ring (23) und Dichtungen (24), die zwischen dem Zylinder (22) und einem Hauptkörper (12) des Halteorgans (1) eingefügt sind, umfasst.

2. Element nach Anspruch 1, **dadurch gekennzeichnet, dass** das Führungsmittel (15) als Rotationskonus konfiguriert ist.

3. Element nach Anspruch 1, **dadurch gekennzeichnet, dass** das Führungsmittel (15) als Konus vom Pyramidentyp konfiguriert ist.

4. Element nach Anspruch 1, **dadurch gekennzeichnet, dass** der Ring (23) und die Dichtungen (24) die Aufnahme (11) definieren.

5. Element nach Anspruch 1, **dadurch gekennzeichnet, dass** der Körper (12) mit mindestens zwei Greiforganen (14) versehen ist.

6. Element nach Anspruch 1, **dadurch gekennzeichnet, dass** die Innenwand (18) des Führungsmittels glatt oder mit einem Antihaftmittel beschichtet ist.

7. Element nach Anspruch 1, **dadurch gekennzeichnet, dass** der Steckteil des Halteelements als Stift (27) konfiguriert ist, der fest mit einem Gegenstand verbunden ist, und der Buchsenteil des Organs auf einen Teil (33) eines Elements (31) montiert ist, das schwenkend mit einer Pratze (28), die auf dem Gegenstand befestigt ist, verbunden ist.

## Claims

1. A member (1) for holding an object (2) in position on an element (3) provided with a bore (4), the object (2) comprising a so-called male part (10) designed as a pointed rod, the free end of which is suitable for being inserted into a reception housing (11) provided in a so-called female part (12) of the holding member (1), the reception housing (11) being provided, at its opening (13), with a means (15) for guiding the male part (10) into the reception housing (11) and the guiding means (15) being formed in two parts (19, 20) of similar shape and coaxially fitted into one another, **characterised in that** a cylinder (22) extends a conical part (21), the cylinder (22) and the conical part (21) constituting the inner part (20) of the guiding means (15) and **in that** said member (1) also comprises a ring (23) and seals (24) inserted between the cylinder (22) and a main body (12) of the holding member (1).

2. The member according to claim 1, **characterised in that** the guiding means (15) is designed as a circular cone.

3. The member according to claim 1, **characterised in that** the guiding means (15) is designed as a pyramidal cone.

4. The member according to claim 1, **characterised in that** the ring (23) and the seals (24) define the reception housing (11).

5. The member according to claim 1, **characterised in that** the body (12) is provided with at least two gripping members (14).

6. The member according to claim 1, **characterised in that** the inner wall (18) of the guiding means is smooth or coated with a non-stick coating.

7. The member according to claim 1, **characterised in that** the male part of the holding member is designed as a rod (27) integral with an object and the female part of the member is mounted on a part (33) of an element (31) pivotably connected to a leg (28) attached to said object.
